# EUROPEAN PATENT APPLICATION

(11) **EP 2 261 868 A2**
(43) Date of publication of application: **15.12.2010**
(21) Application number: 10012622.6
(22) Date of filing: 20.08.2003
(51) Int. Cl.: G07D 7/00, G06T 5/00

(54) **Diffraction grating-based optical identification element and its applications**

(30) Priority: 20.08.2002 US 405087 P; 12.09.2002 US 410541 P
(62) Divisional of application: 03793272.0
(71) Applicant: Cyvera Corporation, Wallingford, CT 06492 (US)
(72) Inventor: The designation of the inventor has not yet been filed
(74) Representative: Kunz, Herbert

(57) **Abstract**

Microparticles (8) includes an optical substrate (10) having at least one diffraction grating (12) disposed therein. The grating (12) having a plurality of colocated pitches A which represent a unique identification digital code that is detected when illuminated by incident light (24). The incident light (24) may be directed transversely from the side of the substrate (10) with a narrow band (single wavelength) or multiple wavelength source, in which case the code is represented by a spatial distribution of light or a wavelength spectrum, respectively. The code may be digital binary or may be other numerical bases. The micro-particles (8) can provide a large number of unique codes, e.g., greater than 67 million codes, and can withstand harsh environments. The microparticles (8) are functionalized by coating them with a material/substance of interest, which are then used to perform multiplexed experiments involving chemical processes, e.g., DNA testing and combinatorial chemistry.

## Description

### Cross-Reference to Relate Applications

This patent application claims the benefit of U.S. Provisional Patent Application Serial No. 60/405,087 (Cidra Docket No. CC-0429), filed on August 20, 2002; and U.S. Provisional Patent Application Serial No. 60/410,541 (Cidra Docket No. CC-0543), filed on September 12, 2002, which are incorporated herein by reference. Copending patent application Serial No. (CiDRA Docket No. CC-0648), filed contemporaneously herewith, contains subject matter related hereto and is incorporated herein by reference in its entirety.

### TechniCal Field

This invention relates to optical identification, and more particularly to diffraction grating-based encoded optical elements/micro-particles for performing multiplexed experiments.

### Background Art

A common class of experiments comprises mixing or reacting a labeled but unknown hybrid analyte with a set of "probe" substances, which is known as a multiplexed experiment. Multiplexing allows many properties of the analyte to be probed in simultaneously (or in parallel). For instance, in a gene expression assay, the "target" analyte, usually an unknown sequence of DNA, is labeled with a fluorescent molecule to form the hybrid analyte. Each probe consists of short complementary DNA sequences that will selectively bind to segments of the unknown DNA sequence of the "target" analyte. The probes then are spatially separated and will fluoresce at different levels depending on how well the unknown strand of DNA binds or hybridizes to each probe. By knowing the DNA sequence of each probe, the sequences in the unknown target can be evaluated.

Generally the probes are spatially separated to identify the probe and ultimately the "target" analyte using one of two approaches. The first approach separates the probes in a predetermined grid, where the probe's identity is linked to its position on the grid. One example of this approach is high-throughput screening systems that utilize multi-well plates, where the substance in each well is known. Aother example is a spotted DNA microarray, where printed spots of ologomer DNA sequences are put in a predetermined spatial order on a substrate (usually a glass microscope slide).

A second approach of identifying the probe allows the probes to mix without any specific spatial position, which is often called the "random bead assay" approach. In this approach the probes are not attached to a substrate but are free to move (usually in a liquid medium). This approach has an advantage in that the analyte reaction can be performed in a solution by conventional wet-cheinistry techniques, which gives the probes a better opportunity to interact with the hybrid analyte. This approach, however, requires that each probe be individually identifiable.

There are many known methods and substrate types that can be used for tagging or otherwise uniquely identifying individual probes. Known methods include using polystyrene latex spheres that are colored or fluorescently labeled. Other methods include using small plastic cans with a conventional bar code applied, or a small container that includes a solid support material and a radio-frequency tag.

The methods of uniquely identifying the probes, however, may be large in size, have a limited number of identifiable codes and/or formed of material not suitable to harsh environmental condition, such as high temperature and/or corrosive material.

Therefore, it would be desirable to provide probes that are very small, capable of providing a large number of unique codes (e.g., greater than 1 million codes), and/or have codes intrinsic to the probe which are resistant to harsh enviroments.

### Summary of the Invention

Objects of the present invention include a diffraction grating-based encoded micro-particles that are coated with a substance for multiplexed experiments, which are very small, capable of providing a large number of unique codes, and/or have codes intrinsic to the probe which are resistant to harsh enviroments.

The invention is a significant improvement over chip based assay and existing bead assay technology, as discussed above.

The foregoing and other objects, features and advantages of the present invention will become more apparent in light of the following detailed description of exemplary embodiments thereof.

### Brief Description of the Drawings

Fig. 1 is a side view of an optical identification element, in accordance with the present invention.
Fig. 2 is a side view of an optical identification element illuminated from the side, in accordance with the present invention.
Fig. 3 is a flow chart of the method of attaching a substance to an optical identification element, performing an assay and analyzing the optical identification element, in accordance with the present invention.
Fig. 4 is a side view of an optical identification element having a substance attached to the outer surface thereof, in accordance with the present invention.
Fig. 5 is a schematic view of a plurality of optical identification elements having different identification or codes and coated with different probe substances disposed in a cell with a plurality of test substances, in accordance with the present invention.
Fig. 6 is a schematic view of plurality of optical identification elements after the performance of an assay, aligned in a plurality of grooves, disposed in a glass substrate, and a bead detector that scans each optical identification element for determining the code and fluorescence of each optical identification element, in accordance with the present invention.
Fig. 7 is a side view of an optical identification element after the performance of an assay, and a bead detector that determines the code and fluorescence of the optical identification element, in accordance with the present invention.

### Best Mode for Carrying Out the Invention

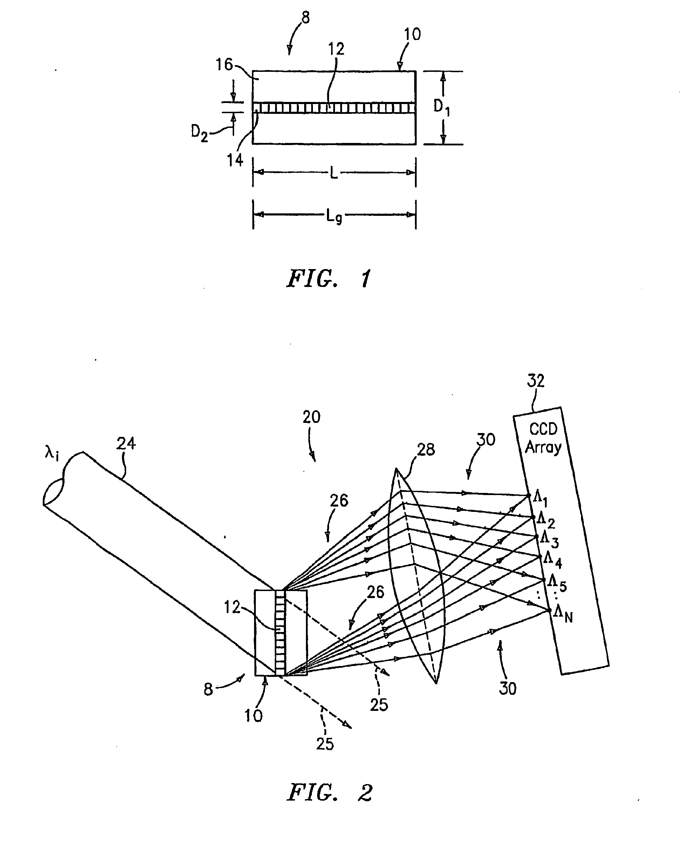

Referring to Fig. 1, an optical identification element 8 (microparticle or microbead) comprises a known optical substrate 10, having an optical diffraction grating 12 disposed (or written, impressed, embedded, imprinted, etched, grown, deposited or otherwise formed) in the volume of or on a surface of a substrate 10. The grating 12 is a periodic or aperiodic variation in the effective refractive index and/or effective optical absorption of at least a portion of the substrate 10.

The microbead or microparticle described herein is the same as that described in Copending patent application Serial No. (CiDRA Docket No. CC-0648), filed contemporaneously herewith, which is incorporated herein by reference in its entirety.

The substrate 10 has an inner region 20 where the grating 12 is located. The inner region may be photosensitive to allow the writing or impressing of the grating 12. The substrate 10 has an outer region 18 which does not have the grating 12 therein.

The grating 12 is a combination of a plurality of individual spatial periodic sinusoidal variations in the refractive index that are collocated along the length of the grating region 20 of the substrate 10, each having a spatial period (or pitch) A. The grating 12 (or a combination of gratings) represents a unique optically readable code, made up of bits. In one embodiment, a bit corresponds to a unique pitch A within the grating 12.

The grating 12 may also referred to herein as a composite or collocated grating. Also, the grating 12 may be referred to as a "hologram", as the grating 12 transforms, translates, or filters an input optical signal to a predetermined desired optical output pattern or signal.

The substrate 10 has an outer diameter D1 and comprises silica glass (SiO₂) having the appropriate chemical composition to allow the grating 12 to be disposed therein or thereon. Other materials for the optical substrate 10 may be used if desired. For example, the substrate 10 may be made of any glass, e.g., silica, phosphate glass, or other glasses, or made of glass and plastic, or solely plastic. For high temperature or harsh chemical applications, the optical substrate 10 made of a glass material is desirable. The optical substrate 10 may be any material capable of having the grating 12 disposed in the grating region 20 and that allows light to pass through it to allow the code to be optically read.

The optical substrate 10 with the grating 12 has a length L and an outer diameter D1, and the inner region 20 diameter D. The length L can range from small (about 1-1000 microns or smaller) to large (about 1.0 - 1000 mm or greater). In addition, the outer dimension D1 can range from small (less than 1000 microns) to large (1.0 - 1000 mm and greater). Other dimensions and lengths for the substrate 10 and the grating 12 may be used. However, for experiment use, smaller size is typically best.

The grating 12 may have a length Lg of about the length L of the substrate 10. Alternatively, the length Lg of the grating 12 may be shorter than the total length L of the substrate 10.

Moreover, the size of any given dimension for the region 20 of the grating 12 may be less than any corresponding dimension of the substrate 10. For example, if the grating 12 has dimensions of length Lg, depth Dg, and width Wg, and the substrate 12 has dimensions of length L, depth D, and width W, the dimensions of the grating 12 may be less than that of the substrate 12. For a cylindrical grating region Thus, the grating 12, may be embedded within or part of a much larger substrate 12. Instead of rectangular dimensions or coordinates for size of the substrate 10, the element 8, or the grating 12, other dimensions/coordinates for size may be used, e.g., polar or vector dimensions.

Also, the element 8 may be embedded or formed in or on a larger object for identification of the object. For example, a microscope slide or test tube can have an element 10 embedded therein or thereon.

The substrate 10 may have end-view cross-sectional shapes other than circular, such as square, rectangular, elliptical, clam-shell, D-shaped, or other shapes, and may have side-view sectional shapes other than rectangular, such as circular, square, elliptical, clam-shell, D-shaped, or other shapes. Also, 3D geometries other than a cylinder may be used, such as a sphere, a cube, a pyramid or any other 3D shape. Alternatively, the substrate 10 may have a geometry that is a combination of one or more of the foregoing shapes.

The dimensions, geometries, materials, and material properties of the substrate 10 are selected such that the desired optical and material properties are met for a given application. The resolution and range for the optical codes are scalable by controlling these parameters (discussed more hereinafter).

The substrate 10 may be coated with a polymer material or other material that may be dissimilar to the material of the substrate 10, provided that the coating on at least a portion of the substrate, allows sufficient light to pass transversely through the substrate for adequate optical detection of the code using side illumination.

Referring to Fig. 1, the outer region 18 is made of pure silica (SiO₂) and has a refractive index n2 of about 1.458 (at a wavelength of about 1553 nm); and the inner grating region 20 of the substrate 10 has dopants, such as germanium and/or boron, to provide a refractive index n1 of about 1.453, which is less than that of outer region 18 by about 0.005. Other indices of refraction n1,n2 for the grating region 20 and the outer region 18, respectively, may be used, if desired, provided the grating 12 can be impressed in the desired grating region 20. For example, the grating region 20 may have an index of refraction that is larger than that of the outer region 18 or grating region 20 may have the same index of refraction as the outer region 18 if desired.

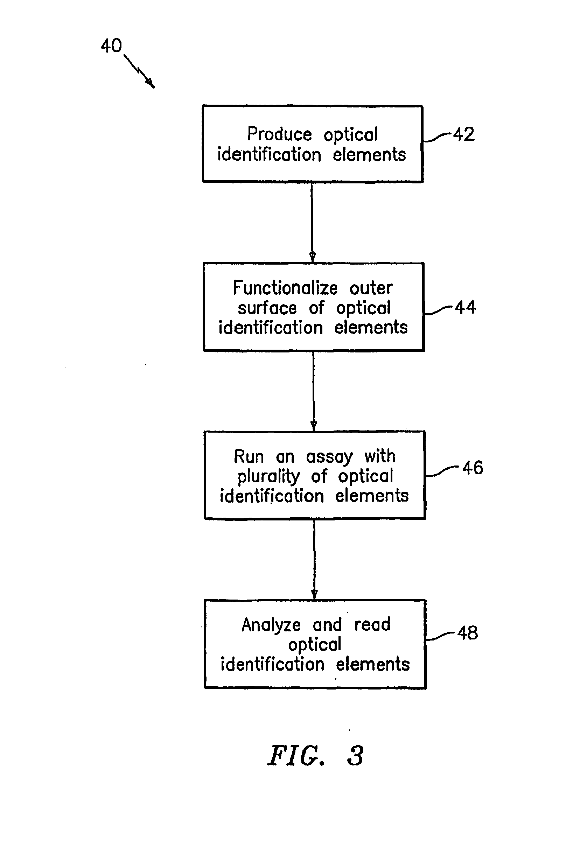

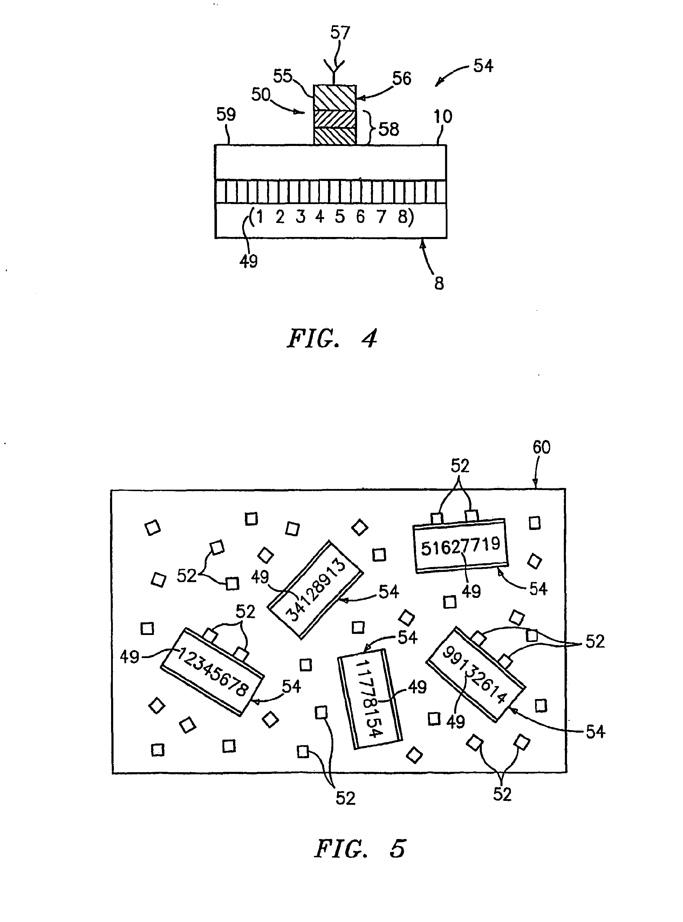

The primary purpose of the outer region 18 (or region without the grating 12) of the substrate 10 is to provide mechanical or structural support for the inner grating region 20. Referring to Fig. 3, accordingly, the entire substrate 10 may comprise the grating 12, if desired. Referring to Fig. 4, alternatively the support portion may be completely or partially beneath, above, or along one or more sides of the grating region 20, such as in a planar geometry (Fig. 4), or a D-shaped geometry (Fig. 5), or other geometries. The non-grating portion 18 of the substrate 10 may be used for other purposes as well, such as optical lensing effects or other effects (discussed hereinafter).

Also, the end faces of the substrate 10 need not be perpendicular to the sides or parallel to each other.

The incident light 24 of a wavelength λ, e.g., 532 nm from a known frequency doubled Nd:YAG laser or 632nm from a known Helium-Neon laser, is incident on the grating 12 in the substrate 10. Any other input wavelength λ can be used if desired provided λ is within the optical transmission range of the substrate (discussed more hereinafter).

A portion of the input light 24 passes straight through the grating 12 as indicated by dashed lines 25. The remainder of the light 24 is reflected by the grating 12 and forms a plurality of beams 26-36, each having the same wavelength λ as the input wavelength λ and each having a different angle indicative of the pitches (Al-An) existing in the grating 12.

As discussed hereinbefore, the grating 12 is a combination of a plurality of individual spatial periods or pitches A of the refractive index variation along the substrate, each collocated at substantially the same location on the substrate 10 (discussed more hereinafter). The resultant combination of these individual pitches is the grating 12 comprising spatial periods (∧l-∧n) each representing a bit in the code. Accordingly, the code is determined by which spatial periods (∧l-∧n) exist (or do not exist) in a given composite grating 12. The code may also be determined by additional parameters as well as discussed hereinafter.

The reflected light 26-36 passes through a lens 37, which provides focused light beams 46-56 which are imaged onto a CCD camera 60. Instead of or in addition to the lens 37, other imaging optics may be used to provide the desired characteristics of the optical image/signal onto the camera 60 (e.g., spots, lines, circles, ovals, etc.), depending on the shape of the substrate and input optical signals. Also, instead of a CCD camera other devices may be used to read/capture the output light.

Each of the individual spatial periods (∧l-∧n) in the grating 12 is slightly different, thus producing an array of N unique diffraction conditions (or diffraction angles) discussed more hereinafter. When the element 8 is illuminated from the side, in the region of the grating 12, at the appropriate angle (discussed hereinafter), with a single input wavelength λ (monochromatic) source, the diffracted (or reflected) beams 26-36 are generated.

The beams 26-36 are imaged onto the CCD camera 60 to produce a pattern of light and dark regions representing a digital (or binary) code, where light =1 and dark = 0 (or vice versa). The digital code may be generated by selectively creating individual index variations (or individual gratings) with the desired spatial periods ∧l-∧n. Other illumination, readout techniques, types of gratings, geometries, materials, etc. may be used as discussed in the aforementioned patent application.

Referring to Figs. 3 - 7, the substrate 10 of the optical identification element (or microbead) 8 may functionalized by coating the substrate with a material of interest 50, which is then used in a chemical reaction or as an attractant for certain chemicals 52. This capability to uniquely encode a large number of microbeads 8 with a corresponding number of different substances or materials attached to each microbead enables these coated microbeads to be mixed with an unknown analyte 52 to perform a multiplexed experiment. The procedure 40 for performing such a multiplexed assay or experiment includes the steps of producing 42 the probe or microbead 8, as described hereinbefore, and functionalizing 44 the outer surface of the microbead 8 by coating/depositing it with a material 50 that will react in a predetermined way with other chemicals/substances 52. An assay is then performed 46 with a plurality of microbeads with different identification codes 49 at the same time. In step 48, the fluorescence of the microbeads 8 is analyzed, and the identification element 8 is read to determine the code of each microbead to thereby determine information about the chemical reaction.

In Fig. 4, a coated microbead 54 is shown, wherein the outer surface of the microbead 8 is coated with a material 50 (functionalized) and used in a chemical reaction or as an attractant for certain test material 52 (see Fig. 5). The coating material 50 comprises a probe molecule or compound 56 attached to the microbead 8 by a linker molecule or complex. The probe molecule 56 includes a molecular group 55 for attachment to the linker molecule 58 and a molecule/compound of interest 57, such as an Oligonucleitides (oligos), antibodies, peptides, amino acid strings, cDNA, RNA, chemicals, nucleic acid oliomers, polymers, biological cells, or proteins. For example, the probe molecule 50 may comprise a single strand of DNA (or portion thereof) and the test material 52 comprising at least one unknown single strand of DNA. As shown, the probe molecule 56 is attached or adhered to the outer surface of the substrate 10 by a linker molecule or complex 58. In some instances, the molecule of interest 57 of the probe molecule 56 may be attached directly to the outer surface of the substrate 10, or directly synthesized (or grown) onto the surface of the microbead 8, such as via phosphoramidite chemistry. Examples of surface chemistry for the microbeads 8 include Streptavidin/biotinylated oligos and Aldehyde/amine modified oligos. Further, the microbead may be coated with blocker of non-specific binding (e.g., salmon sperm DNA) to prevent bonding of molecules (e.g. DNA) to the non-functionalized surface 59 of the microbeads.

Referring to Fig. 5, a plurality of functionalized microbeads 54 may then be placed within a cell or container 60 to perform an assay. As discussed in step 46 of Fig. 3, the functionalized microbeads 54 placed in the cell have different identification codes 49. Each identification code 49 corresponds to a unique molecule of interest 57. For example, all functionalized microbeads 54 disposed within the cell having an identification code of 12345678 is coated with a unique molecule of interest 52, while all functionalized microbeads 54 having an identification code of 34128913 is coated with a different unique molecule of interest.

The test material or molecules 52, disposed within a solution, are then injected into the cell 60 and mixed with the functionalized microbeads 54. The test molecules may include a single type of unknown molecule, or in most cases, the test molecules comprise a plurality of different unknown test molecules. During mixing of the solution of test molecules 52 and functionalized microbeads 54, the test molecules attach to the complementary molecules of interest 57, as shown for functionalized microbeads having codes 12345678, 51627719, and 99132614. For example as discussed hereinbefore, each coded functionalized microbead 8 has a unique molecules of interest 57 attached thereto, such as a portion of a single strand of DNA. Similarly, the test molecules of the analyte comprise a plurality of unknown single strands of DNA. These test molecules 52 are also processed with a fluorescent, such as dyeing, such that the test molecules illuminate. As will be discussed hereinafter, the fluorescence of the test molecules 52 provide the means to identify, which functionalized microbeads have a test molecule attached thereto.

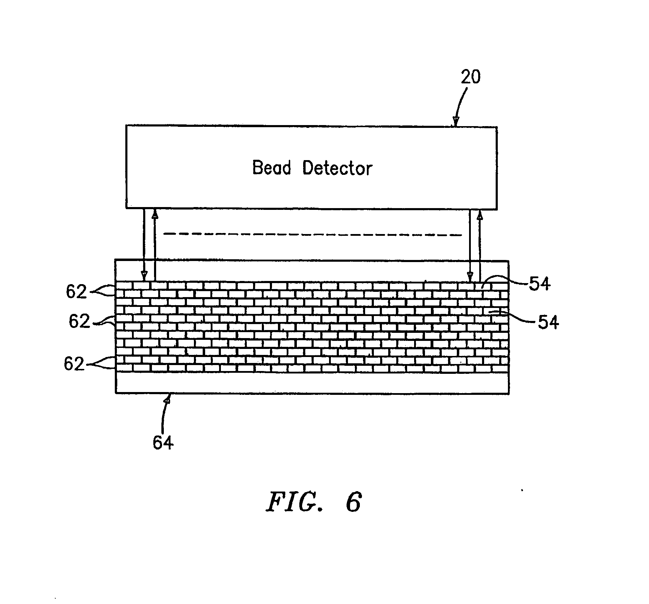

Once the reaction or combining is complete, the functionalized microbeads 54 are rinsed off with a saline solution to clean off the uncombined test molecules 52. As shown in Fig. 6, the functionalized microbeads 54 may be placed in a tray 64 with grooves 62 to allow the microbeads 54 to be aligned in a predetermined direction, such as that described in U.S. Patent Application Serial No. (Cidra Docket No. CC-0648), filed contemporaneously" which is incorporated herein by reference. The grooves 62 may have holes (not shown) that provide suction to keep the microbeads 54 in position. Once aligned in the tray 64, the functionalized microbeads 54 are individually scanned and analyzed by the bead detector 20.

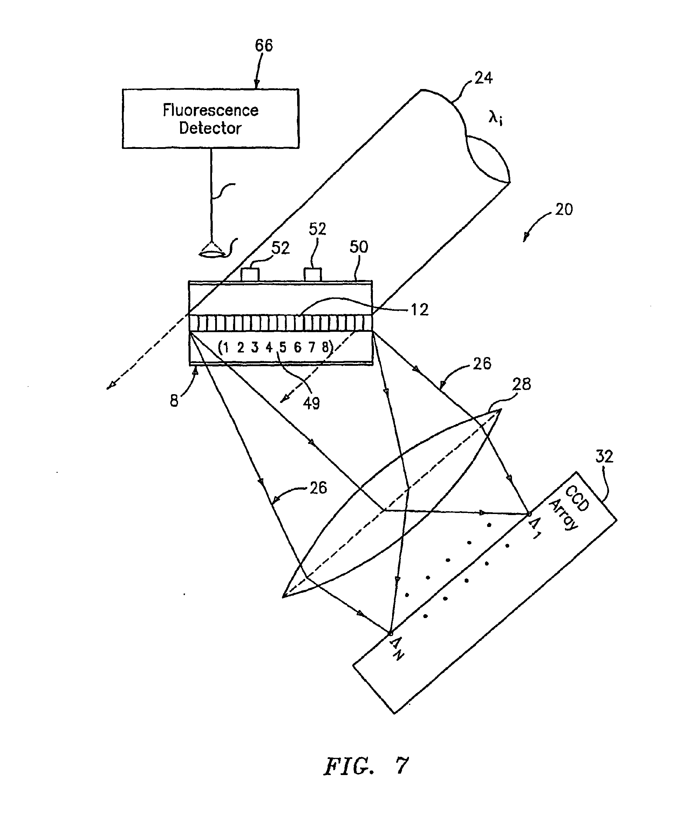

As best shown in Fig. 7, each functionalized microbead 54 is detected for fluorescence and analyzed to determine the identification code 49 of the microbead 54. A light source (not shown) may be provided to luminate the microbeads 54. Once the fluorescent microbeads 54 are identified and knowing which single strand of DNA was attached to each coded micribead 54, the bead detector 20 determines which single strands of DNA were present in the test material 52. As described hereinbefore, the bead detector 20 illuminates the microbead 54 and focuses light reflected by the diffraction grating 12 onto a CCD array or camera 31, whereby the code 49 of the microbead is determined. Secondly, the bead detector 20 includes a fluorescence detector 66 for measuring the fluorescence emanating from test molecules 52 attached to the element 8. The fluorescence meter 66 includes a lens 68 and optical fiber 70 for receiving and providing the fluorescence from the test molecules 52 to the fluorescence meter.

The invention may be used in many areas such as drug discovery, functionalized substrates, biology, proteomics, combinatorial chemistry, DNA analysis/tracking/sorting/tagging, as well as tagging of molecules, biological particles, matrix support materials, immunoassays, receptor binding assays, scintillation proximity assays, radioactive or non-radioactive proximity assays, and other assays, (including fluorescent, mass spectroscopy), high throughput drug/genome screening, and/or massively parallel assay applications. The invention provides uniquely identifiable beads with reaction supports by active coatings for reaction tracking to perform multiplexed experiments.

Some current techniques used in combinatorial chemistry or biochemistry are described in US Patent No. 6,294,327, entitled "Apparatus and Method for Detecting Samples Labeled With Material Having Strong Light Scattering Properties, Using Reflection Mode Light and Diffuse Scattering", issued Sept. 23, 2001 to Walton et al.; US Patent No. 6,242,180, entitled "Computer Aided Visualization and Analysis System for Sequence Evaluation", issued June 5, 2001, to Chee; US Patent No. 6,309,823 entitled "Arrays of Nucleic Acid Probes for Analyzing Biotransformation of Genes and Methods of Using the Same", Oct. 30, 2001, to Cronin et al.; US Patent No. 6,440,667, entitled "Analysis of Target Molecules Using an Encoding System"; US Patent No. 6,355,432, entitled "Products for Detecting Nucleic Acids"; US Patent No. 6,197,506, entitled "Method of Detecting Nucleic Acids"; US Pat No. 6,309,822, entitled "Method for comparing copy number of nucleic acid sequences"; US Patent No. 5,547,839, entitled "Sequencing of surface immobilized polymers utilizing microflourescence detection", which are all incorporated herein by reference to the extent needed to understand the present invention.

The invention can be used in combinatorial chemistry, active coating and functionalized polymers, as well as immunoassays, and hybridization reactions. The invention enables millions of parallel chemical reactions, enable large-scale repeated chemical reactions, increase productivity and reduce time-to-market for drug and other material development industries.

The microbeads 8 are inexpensive to manufacture and the identification codes 49 are easy and inexpensive to imprint into the microbeads. The codes are digitally readable and easily adapted to optical coding techniques. Thus, the optical readout is very simple and inexpensive to implement. The code is not affected by spot imperfections, scratches, cracks or breaks. In addition, splitting or slicing an element axially produces more elements with the same code; therefore, when a bead is axially split-up, the code is not lost, but instead replicated in each piece. Unlike electronic ID elements, the elements of the present invention are not affected by nuclear or electromagnetic radiation.

The dimensions and geometries for any of the embodiments described herein are merely for illustrative purposes and, as such, any other dimensions may be used if desired, depending on the application, size, performance, manufacturing requirements, or other factors, in view of the teachings herein.

It should be understood that, unless stated otherwise herein, any of the features, characteristics, alternatives or modifications described regarding a particular embodiment herein may also be applied, used, or incorporated with any other embodiment described herein. Also, the drawings herein are not drawn to scale.

Although the invention has been described and illustrated with respect to exemplary embodiments thereof, the foregoing and various other additions and omissions may be made therein and thereto without departing from the spirit and scope of the present invention.

Further aspects of the invention should be emphasized and described:
1. An optical identification element having a chemical attached thereto, comprising:
   a substrate (10);
   at least a portion of said substrate having at least one diffraction grating (12) disposed therein, said grating having at least one refractive index pitch superimposed at a grating location;
   the grating (12) providing an output optical signal indicative of a code (49) when illuminated by an incident light signal propagating in free space; and
   the chemical being attached to at least a portion of said substrate.
2. The apparatus of aspect 1 wherein said substrate is made of a material selected from the group: glass, plastic, rubber, and polymer.
3. The apparatus of aspect 1 wherein said grating comprises a plurality of refractive index pitches superimposed at said grating location.
4. The apparatus of aspect 1 wherein said code comprises a plurality of digital bits.
5. The apparatus of aspect 1 wherein said code (49) comprises a plurality of bits, each bit having a plurality of states.
6. The apparatus of aspect 1 wherein said code (49) comprises a plurality of bits, each bit having a corresponding spatial location and each bit in said code having a value related to the intensity of said output optical signal at the spatial location of each bit.
7. The apparatus of aspect 6 wherein the value of each bit corresponds to the magnitude of refractive index variation of a corresponding refractive index pitch in said grating.
8. The apparatus of aspect 1 wherein said code (49) comprises a plurality of digital bits, each bit having a corresponding spatial location and each bit in said code having a binary value related to the intensity of said output optical signal at the spatial location of each bit.
9. The apparatus of aspect 8 wherein the value of each bit corresponds to the presence or absence of a corresponding refractive index pitch in said grating.
10. The apparatus of aspect I wherein said incident light comprises a single wavelength.
11. The apparatus of aspect I wherein said incident light comprises a plurality of wavelengths or a single wavelength scanned over a predetermined wavelength range.
12. The apparatus of aspect 11 wherein said code comprises a plurality of bits, and each bit in said code (49) having a value related to the intensity of said output optical signal at a wavelength corresponding to each bit.
13. The apparatus of aspect 1 wherein said substrate (10) has a reflective coating disposed thereon.
14. The apparatus of aspect 1 wherein said substrate (10) has a coating disposed on at least a portion of said substrate, at least a portion of said coating being made of a material that allows sufficient amount of said incident light signal to pass through said material to allow detection of said code.
15. The apparatus of aspect 1 wherein said substrate has a cylindrical shape.
16. The apparatus of aspect 1 wherein said substrate has a geometry having protruding sections.
17. The apparatus of aspect 1 wherein at least a portion of said substrate (10) has a side view geometry selected from the group: circular, square, rectangular, elliptical, clam-shell, D-shaped, and polygon.
18. The apparatus of aspect 1 wherein said incident light (24) is incident on said substrate along a longitudinal grating axis of said grating (12).
19. The apparatus of aspect 1 wherein said incident light (24) is incident on said substrate (10) at an angle to a longitudinal grating axis of said grating.
20. The apparatus of aspect 1 wherein said grating (12) is a blazed grating.
21. The apparatus of aspect 1 wherein said substrate comprises a plurality of said gratings each at different locations within said substrate.
22. The apparatus of aspect 1 wherein said chemical comprises at least one gene, oligonucleotide, protein, antibody, peptide, amino acid, NDA, cDNA, RNA, nucleic acid oligomer, polymer, or biological cell, or portion thereof.
23. An encoded particle (8) having a chemical attached thereto, comprising:
   a particle, at least a portion of which having at least one diffraction grating (12) disposed therein, said grating having a resultant refractive index variation at a grating location;
   said grating providing an output optical signal indicative of a code (49) when illuminated by an incident light (24) signal propagating in free space, and
   the chemical being attached to at least a portion of said particle.
24. A method of reading an encoded optical identification element (8) having a chemical attached thereto, comprising:
   obtaining a substrate (10), at least a portion of which having at least one diffraction grating (12) disposed therein, said grating having at least one refractive index pitch disposed at a grating location;
   attaching the chemical to at least a portion of said substrate;
   illuminating said substrate with incident light (24) propagating in free space, said substrate providing an output light signal (26-36) indicative of a code (49); and
   reading said output light signal and detecting said code therefrom.
25. A method of performing a multiplexed particle assay, comprising:
   obtaining a plurality of substrates (10), each substrate having at least one diffraction grating (12) disposed therein, said grating having at least one refractive index pitch superimposed at a grating location;
   attaching at least one probe to at least one of said substrates, thereby providing functionalized particles (8);
   placing said functionalized particles in contact with at least one analyte (52), said analyte having a corresponding label disposed thereon;
   illuminating said particles with at least one incident light (24), said particle providing a first output light signal (26-36) indicative of a code (49) and a second output light signal indicative of said label;
   reading said first output light signal (26-36) and detecting said code therefrom; and
   reading said second output light signal and detecting said label therefrom.
26. The method of aspect 25 wherein said label comprises a fluorescent label.
27. The method of aspect 25 wherein said incident light (24) comprises a first incident light signal providing said output light signal and a second incident light signal providing said second output light signal.

## Claims

1. An encoded microparticle comprising:
a microparticle comprising an optical substrate having a code disposed in the optical substrate, the code comprising a variation in at least one of an effective refractive index and effective optical absorption of the optical substrate, the code extending along a length of the optical substrate; and
the optical substrate having an inner region where the code is located and an outer region that does not include the code, the outer region comprising a material that allows an input light to pass through the outer region to allow the code to be optically read, the code providing an output light that is configured to be detected.

2. The microparticle in accordance with claim 1, further comprising a probe molecule attached to an outer surface of the optical substrate, the code corresponding to the probe molecule.

3. The microparticle in accordance with claims I or 2, wherein a portion of the input light passes through the code and a remainder of the input light is reflected by the code, the output light passing through the outer region.

4. The microparticle in accordance with one of claims 1-3, wherein the code has a length that is shorter than the length of the optical substrate.

5. The microparticle in accordance with claim 4, wherein the optical substrate has a depth and a width and the code has a length, a depth, and a width, each of the length, the depth, and the width of the code being less than the length, the depth, and the width of the optical substrate, respectively.

6. The microparticle in accordance with one of claims 1-5, wherein the length of the optical substrate is 1-1000 microns.

7. The microparticle in accordance with one of claims 1-6, wherein the outer region provides structural support for the code.

8. The microparticle in accordance with one of claims 1-7, wherein an end-view cross-sectional shape of the optical substrate is rectangular.

9. The microparticle in accordance with one of claims 1-8, wherein a side view cross-sectional shape of the optical substrate is rectangular.

10. The microparticle in accordance with claim with one of claims 1-9, wherein at least a portion of the optical substrate is coated with a polymer material that is dissimilar to a material of the optical substrate, the coating allowing sufficient light to pass transversely through the optical substrate for adequate optical detection of the code.

11. The microparticle in accordance with one of claims 1-10, wherein the code is one of written, impressed, embedded, imprinted, etched, grown, and deposited in the optical substrate.

12. The microparticle in accordance with claim 2, further comprising a probe molecule attached to an outer surface of the optical substrate, wherein the probe molecule includes a molecule of interest, the code corresponding to the molecule of interest.

13. The microparticle in accordance with one of claims 1-12, wherein the optical substrate includes a grating that represents the code, the grating comprising said variation in at least one of the effective refractive index and effective optical absorption of the optical substrate.

14. A method of detecting a code from a functionalized microparticle, the method comprising:
providing functionalized microparticles, each of the microparticles comprising an optical substrate having a code disposed in the optical substrate, the code comprising a variation in at least one of an effective refractive index and effective optical absorption of the optical substrate, the code extending along a length of the optical substrate, the optical substrate having an inner region where the code is located and an outer region that does not include the code;
illuminating the microparticles with an input light, the outer region comprising a material that allows an input light to pass through the outer region to allow the code to be optically read, the code providing an output light; and
detecting the output light to determine the codes of the microparticles.

15. The method in accordance with claim 14, wherein the optical substrate has a probe molecule attached to an outer surface thereof, the code corresponding to the probe molecule.

16. The method in accordance with claim 15, further comprising placing the microparticles in a container to react with a solution of test molecules, the test molecules attaching to complementary molecules of interest of the probe molecules.

17. The method in accordance with claim 16, wherein the test molecules are configured to emanate fluorescence, the method further comprising detecting the fluorescence.

18. The method in accordance with one of claims 14-17, wherein the optical substrate includes a grating that represents the code, the grating comprising said variation in at least one of the effective refractive index and effective optical absorption of the optical substrate.
